# EUROPEAN PATENT SPECIFICATION

(11) **EP 1 836 854 B1**
(45) Date of publication and mention of the grant of the patent: **28.01.2009**
(21) Application number: 05700781.7
(22) Date of filing: 10.01.2005
(51) Int. Cl.: H04N 7/26, H04N 7/36, H04N 7/50

(54) **APPARATUS FOR PREDICTIVELY ENCODING A SEQUENCE OF FRAMES**
VORRICHTUNG ZUR PRÄDIKTIVEN CODIERUNG EINER BILDSEQUENZ
APPAREIL PERMETTANT DE CODER DE MANIERE PREDICTIVE UNE SEQUENCE DE TRAMES

(43) Date of publication of application: 26.09.2007
(73) Proprietor: NTT DoCoMo Inc., Chiyoda-Ku Tokyo 100-6150 (JP)
(72) Inventor: KELLERER, Wolfgang, 82256 Fuerstenfedlbruck (DE); SGROI, Marco, 80331 Munich (DE); STEINBACH, Eckehard, 82140 Oliching (DE); TU, Wei, 80809 Munich (DE)
(74) Representative: Zinkler, Franz
(86) International application number: PCT/EP2005/000141
(87) International publication number: WO 2006/072265

(56) References cited:
- EP-A- 0 763 944
- "Recommendation H.263: Video coding for low bit rate communication" ITU-T DRAFT RECOMMENDATION H.263, February 1998 (1998-02), pages 1-167, XP002176560
- YU H-B ET AL: "A highly efficient, low delay architecture for transporting H.264 video over wireless channel" SIGNAL PROCESSING. IMAGE COMMUNICATION, ELSEVIER SCIENCE PUBLISHERS, AMSTERDAM, NL, vol. 19, no. 4, April 2004 (2004-04), pages 369-385, XP004495311 ISSN: 0923-5965
- WANG T-C ET AL: "LOW-DELAY AND ERROR-ROBUST WIRELESS VIDEO TRANSMISSION FOR VIDEO COMMUNICATIONS" IEEE TRANSACTIONS ON CIRCUITS AND SYSTEMS FOR VIDEO TECHNOLOGY, IEEE INC. NEW YORK, US, vol. 12, no. 12, December 2002 (2002-12), pages 1049-1058, XP001141937 ISSN: 1051-8215
- YOUNG-GOOK KIM ET AL: "Network-aware error control using smooth and fast rate adapation mechanism for TCP-friendly internet video" COMPUTER COMMUNICATIONS AND NETWORKS, 2000. PROCEEDINGS. NINTH INTERNATIONAL CONFERENCE ON LAS VEGAS, NV, USA 16-18 OCT. 2000, PISCATAWAY, NJ, USA,IEEE, US, 16 October 2000 (2000-10-16), pages 320-325, XP010524526 ISBN: 0-7803-6494-5
- GUO-SHIANG MA ET AL: "Error-resilient real-time video communications over IP-based LANs" MULTIMEDIA AND EXPO, 2001. ICME 2001. IEEE INTERNATIONAL CONFERENCE ON 22-25 AUG. 2001, PISCATAWAY, NJ, USA,IEEE, 22 August 2001 (2001-08-22), pages 80-83, XP010661778 ISBN: 0-7695-1198-8
- "TEXT OF FINAL COMMITTEE DRAFT OF JOINT VIDEO SPECIFICATION (ITU-T REC. H.264 / ISO/IEC 14496-10 AVC)" INTERNATIONAL ORGANIZATION FOR STANDARDIZATION - ORGANISATION INTERNATIONALE DE NORMALISATION, July 2002 (2002-07), pages I-XV,1, XP001100641

## Description

The present invention is in the field of telecommunications and, in particular, in the field of prediction encoding.

In 3G networks, video services are expected to be among the most popular ones and may be the key factor for success. Wireless video applications without real-time constraints (e.g. Multimedia Messaging Service) have been introduced to the market. However, real-time video communication over wireless networks remains challenging. Decoding of erroneous or incomplete video bit-streams leads to severe quality degradations. Because of motion compensated prediction, these impairments also propagate in space and time and therefore stay visible for a significant amount of time. Hence, an error resilient transmission scheme is essential to achieve good quality in a wireless multimedia communication system.

The document "Recommendation H.263: Video coding for low bit rate communication" ITU-T DRAFT RECOMMENDATION H.263, February 1998 (1998-02), pages 1-167, with particular reference to the Reference Picture Selection mode in the pages 96-102, Annex N, is the closest prior art for the invention as claimed and describes a method for video coding including the choice of a minimum number of frames separating a current image from its reference image by using a parameter Temporal Reference and a method for video transmission including a back channel for transmitting acknowledment of correct or uncorrect decoding of a video picture segment at a receiver.

A recent tutorial overview of approaches for error resilient video transmission can be found in Y. Wang and Q. Zhu, "Error control and concealment for video communications: A review," Proceedings of IEEE, Special Issue on Multimedia Signal Processing, pages 974-997, May 1998 and in T. Stockhammer, M. Hannuksela, and T. Wiegand, "H.264/AVC in Wireless Environments", IEEE Transactions on Circuits and Systems for Video Technology, vol. 13, no. 7, pages 657-673, July 2003. The specific error resiliency tools defined for the recently defined standard H.264/MPEG-4 AVC are described for instance in T. Stockhammer, M. Hannuksela, and T. Wiegand, "H.264/AVC in Wireless Environments", IEEE Transactions on Circuits and Systems for Video Technology, vol. 13, no. 7, pages 657-673, July 2003. Most error resiliency tools require at least partial information about the current transmission situation in order to optimally trade-off error resilience versus coding efficiency.

For traditional data communication applications retransmission of lost information triggered by feedback from the receiver is considered to be the most suitable approach for error resilience. The big advantage of feedback-based retransmission is its inherent adaptiveness to varying loss rates. Retransmissions are only triggered if information is actually lost. The overhead encountered is therefore a direct function of loss rate and the sender does not need to receive explicit information about the expected channel condition. For bi-directional conversational services like video telephony, however, the benefit of traditional packet retransmission is limited because of the stringent one-way latency requirements, which are typically in the range of 250 ms.

Because of this limitation of retransmission-based approaches, alternative ways to exploit feedback information from the receiver have been proposed. Error tracking as described in W. Wada, "Selective recovery of video packet losses using error concealment," IEEE J. Select. Areas Commun., vol. 7, pages 807-814, June 1989, and in E. Steinbach, N. Färber, and B. Girod, "Standard compatible extension of H.263 for robust video transmission in mobile environments," IEEE Trans. Circuits Syst. Video Technology, vol. 7, pages 872-881, Dec. 1997, for instance, uses feedback about lost packets at the sender to reconstruct error propagation. Corrupted areas are encoded in intra mode, which leads to error recovery without introducing additional delay. Another proposal that uses feedback information to stop error propagation is NEWPRED as described in ITU-T/SG15/LBC-96-033, "An error resilience method based on back channel signaling and FEC," Telenor R&D, San Jose, Jan. 1996, and in S. Fukunaga, T. Nakai, and H. Inoue, "Error resilient video coding by dynamic replacing of reference pictures," in Proc. IEEE GLOBECOM, vol. 3, Nov. 1996, pages 1503-1508. Here, feedback about lost packets or correctly received packets is used to restrict the prediction from those image areas that have been decoded successfully. The reference picture selection (RPS) concept introduced in H.263 Annex U, which has been adopted in H.264/AVC, supports a standard-compatible implementation of NEWPRED. The feedback information can also be incorporated into a rate-distortion optimized mode decision as shown in T. Wiegand, N. Faerber, K. Stuhlmueller, B. Girod, "Error- Resilient Video Transmission Using Long-Term Memory Motion-Compensated Prediction," IEEE Journal on Selected Areas in Communications, vol. 18, no. 6, pages 1050-1062, June 2000 and in Y.J. Liang, M. Flier1, and B. Girod, "Low-Latency Video Transmission over Lossy Packet Networks Using Rate-Distortion Optimized Reference Picture Selection," Proc. IEEE International Conference on Image Processing, vol. 2, pages 181-184, Rochester, NY, September 2002.

In Injong Rhee and Srinath Joshi, "Error Recovery for Interactive Video Transmission over the Internet," IEEE Journal on Selected Areas in Communications, Special Issue on Error Robust Transmission of Images and Video, vol. 18, no. 6, pages 1033-1049, June 2000, a retransmission-based approach for end-to-end video error recovery called RESCU has been proposed. The main idea of RESCU is to change the frame dependencies in a video sequence such that a retransmission of lost information can be used for error recovery despite the low delay requirements of real-time video communication. In RESCU every p-th frame is a so-called periodic frame that references another periodic frame p frame intervals away. The frames that are in-between two consecutive periodic frames are encoded with the previous periodic frame as the reference frame. If a non-periodic frame is lost, the error propagation stops at the next periodic frame. If a periodic frame is lost it is displayed using error concealment and a retransmission request is sent to the sender. If the retransmission arrives before the next periodic frame is to be displayed, fast decoding produces an error free reference frame for it.

In order to make RESCU work, the receiver has to be able to decode retransmitted information faster than real-time. Accelerated Retroactive Decoding (ARD) has been proposed in another context in Ghanbari, "Postprocessing of late cells for packet video," IEEE Transactions on Circuits and Systems for Video Technology, vol. 6, no. 6, pages 669-678, Dec. 1996. ARD makes use of the ability of many streaming clients (especially those running on PCs) to decode video faster than real-time. Ordinarily, when packets used to decode a frame of video arrive late, an entire series of frames is distorted due to prediction dependencies among encoded frames. With ARD, when late-arriving packets finally do arrive, the decoder goes back to the frames corresponding to the late arriving packets and quickly re-decodes the dependency chain up to the current play-out position, this time without error. The remaining pictures in the GOP (Group of Pictures) can then be decoded without error.

It should be noted that the above-indicated problems generally occur when erroneously receiving predictively encoded frames representing any kind of information, e.g. speech information etc.

It is the object of the present invention to provide a concept for predictively encoding frames such that error propagation occurring when decoding erroneously received encoded frames is reduced.

This object is achieved by an apparatus for predictively encoding according to claim 1 or by a frame controller according to claim 8 or by a transmitter according to claim 16 or by a network node according to claim 18 or by a method for predictively encoding according to claim 23 or by a method for generating frame information according to claim 24 or by a computer program according to claim 25.

The present invention is based on the finding that error propagation resulting when erroneously receiving predictively encoded frames can be reduced when a distance between a frame and a reference frame used for predictively encoding is controllable.

In this context it should be noted that the term "error propagation reduction" relates to preventing error propagation or to reducing a number of frames contributing to error propagation, i.e. to timely reducing an error propagation.

When predictively encoding a signal frame in a sequence of signal frames, at least one further signal frame may be used as a reference frame for the signal frame in order to determine and encode information being unpredictable form the reference frame. The reference frame may be a signal frame preceding the signal frame to be encoded. For example the reference frame may be a previous P-frame in a sequence of frames representing a GOP mentioned above. However, a reference frame may be a signal frame following the signal frame to be encoded (e.g. a B-frame in the GOP). Accordingly, both approaches can simultaneously be applied when encoding a signal frame to obtain an encoded frame.

Due to the frame dependencies introduced by prediction encoding, error propagation may occur when decoding encoded frames based on erroneously received (encoded) reference frames.

The error propagation can be reduced when an erroneously received encoded frame is retransmitted prior to receiving (or decoding) an encoded frame depending on the erroneously received encoded frame.

In order to manage the retransmission, for example a receiver can send a quality information to a transmitter transmitting encoded frames or to a base station forwarding the encoded frames, the quality information indicating e.g. an erroneous reception of an encoded frame. The base station may be, for example, configured for receiving the quality information and for re-forwarding the (erroneously received) encoded frame. However, if a time interval between forwarding (or transmitting) the encoded frame and receiving the quality information indicating an erroneous reception of the forwarded (encoded) frame is longer than a time interval being determined by a distance between a frame and a reference frame used for encoding then the retransmitted or re-forwarded encoded frame will not timely be received so that the encoded frame depending on the erroneously received encoded frame cannot error-free be decoded so that the decoding error propagates.

In order to timely stop the error propagation at a receiver, a time interval between a frame and a reference frame in a sequence of frames should preferably be equal to or larger than a round-trip time between a transmitter and a receiver or between a base station and a receiver, when the base station is configured for retransmitting erroneously received encoded frames.

In this context, the round-trip time is a time (or time interval) which is required for transmitting a signal to a network entity and for receiving a response to the signal from the network entity.

However, the round-time time can vary which depends e.g. on a communication scenario. If the round-time time significantly increases then a fixed distance between the frame and the reference frame used for predictively encoding may be too short for reducing the error propagation effects by the means of retransmission. However, if the round-trip time is short then a significantly longer distance between the frame and the reference frame may contribute to reducing a coding gain associated with prediction encoding, without significantly contributing to reducing or prohibiting the error propagation. In this case, the distance between the frame and the reference frame may be reduced so that the coding gain loss decreases which is important in the case of e.g. video transmission.

In accordance with an aspect of the present invention, the inventive concept can be applied for error robust real-time video telephony over wireless networks. In this case, packet loss on the downlink can be dealt with by retransmitting lost packets from the base station to the receiver terminal.

The effect of lost packets may be reduced using e.g. error concealment. Retransmitted packets are used for error recovery. In order to be able to use the retransmissions for error recovery the sender is signaled to use fixed-distance reference picture selection during encoding where the distance to be used corresponds to the round-trip-time measured between the base station and the receiver terminal. Transmission errors are dealt with on the uplink by sending acknowledgment information from the base station to the sender terminal. The video encoder uses this information to predict the next frame to be encoded from the most recent frame that has been positively acknowledged by the base station. The most recent frame that can be used for this is always earlier than the fixed distance reference picture that is adapted to the round-trip time on the downlink. In accordance with the present invention, the two separate approaches for uplink and downlink may be combined and made fit together. The inventive approach is compared to state of the art error resilience approaches that employ random Intra update of macro blocks and FEC across packets for error resilience. At the same bit rate and packet loss rate improvements of up to 4.5 dB are observed in the inventive scheme.

The invention is of benefit to the network operator as it allows overcoming losses by retransmission of packets on the downlink of a mobile communication connection for real-time video transmission. Successfully retransmitted packets are used to stop error propagation by accelerated decoding. The additional overhead introduced is low as only lost packets are retransmitted.

The present invention is fully standard-compatible when using H.264/AVC. The two major assumptions made are the following. It is assumed that the base stations can send feedback about lost packets to the sender and can retransmit lost packets to the receiver. The second assumption is that the decoder has enough computational resources to decode retransmitted slices or frames fast enough to use them to stop error propagation.

Moreover, the present invention can be combined with other error resiliency approaches for performance improvement.

The present invention further provides a framework for mobile video telephony, which deals with downlink packet loss by using fixed-distance reference picture selection (FDRPS) in combination with proxy-based retransmission of lost packets. The reference frame to be used for prediction is determined as a function of round-trip time between base station and receiver on the downlink. To cope with losses on the uplink feedback about lost packets is sent from the base station to the sender (transmitter). The encoder uses this information to predict the current frame from the most recent successfully uploaded reference frame, which is older than the fixed-distance reference frame picked by the downlink strategy.

In comparison to Injong Rhee and Srinath Joshi, "Error Recovery for Interactive Video Transmission over the Internet," IEEE Journal on Selected Areas in Communications, Special Issue on Error Robust Transmission of images and Video, vol. 18, no. 6, pages 1033-1049, June 2000, proxy-based retransmission of lost information on the downlink is considered and therefore low coding efficiency that would be encountered when using RESCU for large end-to-end delays is avoided. Also, different to RESCU in the inventive scheme it does not matter which frame is lost. For every lost frame on the downlink one retransmission is performed and if that retransmission arrives in time the error propagation is stopped. In case the retransmission also gets lost, in the inventive scheme only a subsequence of the video will be affected by error propagation. This allows us to stop displaying this subsequence and to ask the sender for a resynchronization frame. In RESCU, all frames will be affected. According to the present invention, reference pictures for prediction are selected that have been successfully uploaded to the base station. However, different to NEWPRED, the choice of reference picture is additionally constraint by the fixed-distance encoding for downlink adaptation. Besides these major differences to previous work, a contribution of the invention is to extend these ideas towards an end-to-end scenario where losses on the uplink and/or downlink are explicitly dealt with and advantage is taken of the comparatively small but potentially different round-trip times on the uplink and downlink.

In addition, the present invention provides a concept for controlling the prediction encoding in a communication scenario where several network entities, for example a transmitter, one or more network nodes, for example base stations, and a receiver are present.

Further embodiments of the present invention will be described in detail with respect to the following figures, in which:
- Fig. 1: shows a block diagram of an apparatus for predictively encoding a sequence of signal frames according to the present invention;
- Fig. 2: demonstrates error propagation reduction in accordance with the present invention;
- Fig. 3: demonstrates error propagation reduction in accordance with the present invention;
- Fig. 4: shows a network scenario employing the inventive approach;
- Fig. 5: demonstrates the performance of the inventive concept;
- Fig. 6: demonstrates the performance of the inventive concept.

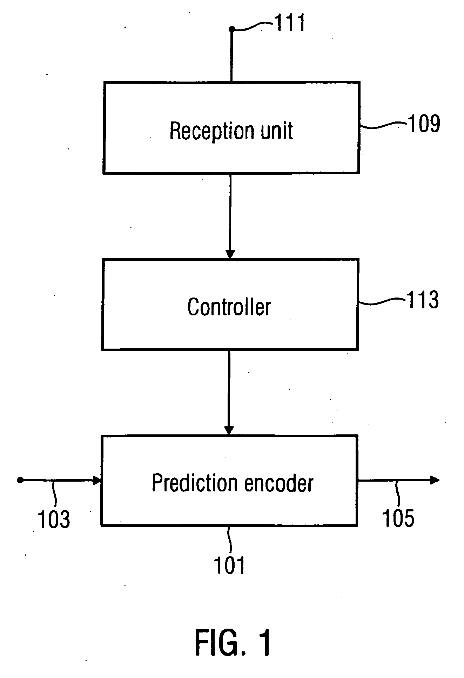

Fig. 1 shows a block diagram of an apparatus for predictively encoding a sequence of signal frames in order to obtain a sequence of encoded frames. The apparatus comprising a prediction encoder 101 having an input 103, an output 105, and a control input 107. The apparatus further comprises a reception unit 109 having an input 111 and an output coupled to a controller 113, the controller having an output coupled to the control input 107 of the prediction encoder 101.

The prediction encoder 101 is configured for performing prediction encoding, i.e. for predictively encoding the sequence of signal frames provided via the input 103, and to provide the sequence of encoded frames via the output 105. More specifically, the prediction encoder 101 is configured for providing a k-th encoded frame from a k-th signal frame and a reference frame for the k-th signal frame. For example, the reference frame is another signal frame in the sequence of signal frames which is spaced apart by a number of frames from the k-th signal frame, wherein k denotes a frame index or an ordering number of a signal frame in the sequence of frames

The prediction encoder 101 may be configured for e.g. determining predictable information being comprised by the k-th signal frame and being predictable from the reference frame and for determining unpredictable information being comprised by the k-th signal frame and being unpredictable from the reference frame. The unpredictable information may represent e.g. an information difference between the k-th encoder frame and the reference frame.

It should be noted that a signal frame or an encoded frame might be constituted of a plurality of bits being arranged to form the respective frame.

The reception unit 109 is configured for receiving frame information indicating a minimum number of frames or a certain number of frames which are to separate the k-th signal frame and the reference frame. Preferably, the reception unit 109 receives the frame information via the input 111 from e.g. a remote receiver or from a network entity being configured for managing network transmissions.

For example, each frame is associated with a certain frame duration, for example 50 or 100 ms. Thus, the minimum number of frames may indicate a time interval to be adjusted between the k-th signal frame and the reference frame. However, the frame information may indicate a minimum time interval between the k-th frame and the reference frame. In this case, the minimum time interval is associated with the minimum number of frames having a total duration equal to or greater than the minimum time interval.

Correspondingly, the frame information may indicate the certain number of frames, which are to separate the k-th signal frame and the reference frame, i.e. a number of frames by which the k-th frame and the reference frame are to be separated. In this case, the frame information may indicate a time duration being associated with a certain number of frames or may directly indicate the certain number of frames being associated with a certain time duration.

The controller 113 is configured for determining a frame number N from the frame information in order to determine the actual number of frames N which are to separate the k-th signal frame and the reference frame in the sequence of frames.

If the frame information indicates the minimum number of frames or, equivalently, the minimum time interval, then the controller 113 determines the frame number N, N being equal to or greater than the minimum number of frames.

Correspondingly, when the frame information indicates the certain number of frames, then the controller 113 may be configured for setting N equal to the certain number of frames.

In accordance with a further aspect of the present invention, the controller 113 may be configured for solving an optimisation problem in order to determine the frame number N such that N is e.g. not smaller than the minimum number of frames and such that, simultaneously, a coding gain loss associated with e.g. increasing a distance between the k-th frame and the reference frame is minimized. If, for example, the coding gain associated with prediction encoding depends on a number of signal frames separating the k-th frame and the reference frame, then the controller 113 may be configured for determining a coding gain loss (coding gain reduction) in dependence on the frame information, e.g. in dependence on the minimum number of frames, in order to determine the number of frames N which is associated with a minimum coding gain loss among other possible frame numbers.

In order to determine the coding gain loss in dependence on the number of frames separating the k-th frame and the reference frame, the frame controller 113 and the prediction encoder 101 may be configured for encoding the same frame in the sequence of frames using different reference frames, i.e. using different signal frames being spaced apart from the k-th signal frame by different distances in the sequence of frames in order to determine the number of frames being equal to or greater than the minimum number of frames and being associated with a minimum or reduced gain loss, by way of example only.

However, the controller 113 may be configured for analytically determining or for estimating the coding gain loss, e.g. when the signal frames in the sequence of frames represent a group of pictures (GOP). For example, the controller 113 may be configured for subtracting the frames from each other in order to determine a degree of difference and to select such N, which is associated with the smallest difference.

The frame number N being determined by the controller 113 may be provided to the prediction encoder 101 via the control input 107. In response to the frame number N, the prediction encoder 101 is configured for selecting a signal frame spaced apart by N frames from the k-th signal frame in the sequence of frames, the signal frame spaced apart by the N frames acting as the reference frame for the k-th signal frame.

The determined frame number N is preferably maintained for encoding all frames in the sequence of frames until the frame number N has been updated or until a new frame number has been determined by the controller 113. However, the determined frame number N can only be maintained for a predetermined number of frames in the sequence of signal frames to be predictively encoded so that the prediction encoder 101 employs the old number of frames after having encoded the predetermined number of signal frames, e.g. after having encoded 20 signal frames. Correspondingly, the prediction encoder 101 may refer to the old number of frames after a certain time interval, e.g. after 400 ms.

For example, the sequence of encoded frames being provided by the prediction encoder 101 is to be transmitted from a transmitter over a communication network via an intermediate network entity, e.g. via a base station, to a remote receiver. The intermediate network entity may be configured for receiving the encoded frames being transmitted by the transmitter and for forwarding the encoded frames to the receiver. Furthermore, the intermediate network entity may be configured for buffering encoded frames and for retransmitting lost or erroneously received frames. In this case, the minimum number of frames is determined by a round-trip time between the intermediate network entity, e.g. the base station, and the remote receiver. In other words, the minimum number of frames defines a minimum time interval which should be equal to or larger than the round-trip time and which should at least be introduced between a frame and a reference frame when predictively encoding the sequence of frames.

The intermediate network entity being configured for buffering encoded frames may be configured for receiving a NACK signal (NACK = negative acknowledgment) from the remote receiver indicating an erroneous reception of a (certain) encoded frame. In response to the NACK signal, the base station may retransmit the erroneously received encoded frame, wherein it is ensured due to the inventive predictive encoding that the encoded frame will timely be received so that error propagation can be reduced.

Preferably, the time interval being defined by the minimum number of frames is equal to or smaller than the round-trip time between the intermediate network entity and the remote receiver and smaller than a round-trip time between the transmitter and the receiver, when the intermediate network entity is configured for retransmitting lost or erroneously received frames to the receiver.

If the intermediate network entity is not capable of retransmitting or if there is no intermediate network entity between the transmitter and the receiver, then the minimum time interval being defined by the minimum number of frames is determined by a round-trip time between the transmitter and the receiver. In particular, the minimum time interval is equal to or larger than the round-trip time between the transmitter and the receiver. In spite of additionally introduced coding loss, error propagation can quickly be stopped when retransmitting erroneously received encoded frames.

As has been mentioned above, the reception unit 109 is configured for receiving frame information indicating the minimum number of the certain number or frames. The frame information may comprise e.g. information on the round-trip time, either between the intermediate network node and the receiver or between the transmitter and the receiver. In this case, the round-trip time indirectly determines e.g. the minimum number of frames having in total a duration equal to or larger than the round-trip time.

According to an embodiment, the round-trip time or information thereon can be provided by e.g. a network node or a network entity being configured for measuring the round-trip time.

According to a further aspect of the present invention, the reception unit 109 is configured for performing round-trip time measurement for determining the minimum number of frames on the basis of time stamps or the like.

As has been mentioned above, the frame information may indicate the certain number of frames directly or indirectly.

Referring to the indirect indication, the prediction encoder 101 may be configured for providing the k-th encoded frame from a k-th signal frame and a reference frame spaced apart by M frames from the k-th signal frame in the sequence of signal frames. In this case, the frame information may indicate that the number M of frames separating the k-th frame and the reference frame is to be increased or decreased in order to obtain the certain number of frames. For example, the controller 113 may be configured for increasing or decreasing M by a predetermined number of frames, e.g. by one or two frames in order to obtain the number of frames N. In this case, a distance between a frame and a reference frame being used for predictively encoding can adaptively be adjusted with reference to the previous distance.

Using the adaptive adjustment scheme, a distance between the frame and the reference frame may solely be increased or decreased by the predetermined number of frames upon receiving frame information from a receiver or from another network entity indicating that a distance between the frame and the reference frame is e.g. too short for timely retransmitting erroneously received frames. The frame information may further indicate that the distance is unnecessarily large so that coding gain loss is unnecessarily introduced. In either case, the distance between the frame and the reference frame can adaptively be increased or decreased by the predetermined number of frames, wherein in each iteration step the certain number of frames with respect to previous certain number of frames is achieved. Accordingly, the frame information may indicate a certain number of frames by which M is to be increased or decreased in order to obtain the number of frames N.

As has been mentioned above, the frame information can be determined by a transmitter or by an intermediate network entity, e.g. a base station.

In accordance with a further aspect, the present invention provides a frame controller for generating the frame information, the frame information indicating a number of frames which are to separate a signal frame and a reference frame in a sequence of frames when predictively encoding the signal frame using the reference frame to obtain an encoded frame to be transmitted from a transmitter to a network node, wherein the network node is configured for forwarding the encoded frame to a remote receiver.

The frame controller can be implemented within a network management system supervising network communications as a separate network entity. In accordance with a further aspect, the frame controller can be implemented in the network node, for example in the base station, or in a transmitter. Furthermore, the inventive frame controller can be implemented in the receiver. Generally speaking, the inventive frame controller can be implemented within any network entity being involved in transmitting, managing, forwarding, or receiving the encoded frames.

According to the present invention, the frame controller is configured for generating the frame information indicating a certain number of frames or a minimum number of frames, as has been described above, which are to separate the signal frame and the reference frame such that a time interval between the signal frame and the reference frame is equal to or larger than a round-trip time between the network node and the receiver and smaller than a round-trip time between the transmitter and the receiver.

In other words, the fame controller is configured for determining the frame information indicating a time interval to be adjusted between a frame and a reference frame such that the network node can timely transmit erroneously or lost encoded frames.

For example, the network node is a base station configured for buffering encoded frames, for receiving quality information indicating a quality of reception of encoded frames and for retransmitting the encoded frames in case the quality information indicates a reception error.

The frame controller may be configured for generating frame information indicating the round-trip time between the network node and the receiver, the round-trip time indicating a duration of a minimum number of frames, which are to separate a frame and a reference frame.

In accordance with a further aspect, the frame controller may be configured for determining a minimum number of frames associated with a time interval which is not smaller than the round-trip time between the network node and the receiver, and for generating frame information indicating the minimum number of frames.

Furthermore, the frame controller may be configured for determining a certain number of frames by which a number of frames separating the signal frame and the reference frame is to be increased or decreased, as has been explained above.

For example, a coding gain associated with prediction encoding depends on a number of frames separating the signal frame and the reference frame and/or on a kind of the signal frames and/or on a size of the signal frames used for prediction encoding. In this case, the frame controller may be configured for determining the certain number of frames associated with a maximum coding gain or, in other words, with a minimum coding gain loss.

For adaptation, the frame controller may be configured for generating the frame information adaptively, e.g. only when the round-trip time between the network node and the receiver has changed.

The information on the round-trip time between the network node and the receiver may be, by way of example only, provided to the frame controller by the network node or by any other network entity being e.g. configured for determining the round-trip time by measurements.

In case the frame controller is separated from the transmitter, the frame controller may comprise a transmitting unit configured for transmitting frame information to the transmitter. If the frame controller is implemented in the network node, then the transmitting units may also be used for forwarding the encoded frames to the receiver.

The present invention further provides a transmitter comprising the apparatus for predictively encoding a sequence of signal frames to obtain a sequence of encoded frames, as has been described above. The transmit apparatus further comprises a frame schedule for scheduling the encoded frames in order to ensure that an encoded frame can be retransmitted to a receiver or to a base station forwarding the encoded frames to the receiver in case of a reception error.

Preferably, the prediction encoder comprised by the apparatus for predictively encoding is configured for providing a k-th encoded frame from a k-th signal frame and from a (k -N)-th signal frame (reference frame) in the sequence of signal frames. Furthermore, the reception unit being comprised by the apparatus for predictively encoding may be configured for receiving quality information from a remote network entity, for example base station or receiver, the quality information indicating a quality of reception of a (k -N)-th encoded frame being transmitted to the remote network entity, the (k -N)-th encoded frame being provided by the prediction encoder from the (k -N)-th signal frame and from a (k - 2N)-th signal frame.

The frame scheduler is preferably configured for scheduling a copy of the (k-N)-th encoded frame for retransmission before transmission of the k-th encoded frame when the quality information indicates an erroneous reception of the (k -N)-th encoded frame which is required for encoding the k-th encoded frame to be transmitted.

Based on the scheduled frames, the apparatus transmits the copy of the erroneously received encoded frame or, in other words, retransmits the erroneously received encoded frame such that error propagation can be stopped as soon as possible.

In addition, the transmit apparatus may comprise the frame controller described above for generating the frame information.

The present invention further provides a network node configured for receiving encoded frames from a transmitter and for forwarding the encoded frames to a receiver. The network node may be, for example, a base station or any other node being configured for forwarding frames to a receiving entity.

In order to transmit encoded frames, the transmitter is configured for predictively encoding a sequence of signal frames in order to obtain the encoded frames, wherein a k-th encoded frame results from predictively encoding a k-th signal frame and a reference frame spaced apart from the k-th signal frame in the sequence of signal frames, as has been described above.

Among other elements for receiving and forwarding encoded frames, the network node comprises means for measuring a round-trip time between the network node and the receiver in a manner which has been described above.

Furthermore, the network node comprises the aforementioned frame controller for generating frame information from the round-trip time, the frame information indicating a certain number or a minimum number of frames, which are to separate the k-th signal frame and the reference frame in the sequence of signal frames. In addition, the network node comprises a transmitting unit configured for transmitting the frame information to the transmitter. The transmitting unit may be, for example, furthermore configured for forwarding the encoded frames to the receiver. However, the transmitting units may be an additional unit to already existing further transmitting units being configured for transmitting signals over the communication network.

According to the present invention, the network node may be configured for receiving quality information from the receiver, the quality information indicating a quality of reception of an encoded frame being forwarded by the network node to the receiver, and for re-forwarding the encoded frame to the receiver when the quality information indicates an erroneous reception of the encoded frame.

However, the network node may not forward the erroneously received encoded frame even if the quality information indicates the erroneous reception when the reception errors are seldom, i.e. 1% of all encoded frames or in the case of a heavy traffic.

Furthermore, the network node may comprise a storage element for buffering the transmitted encoded frames so that an erroneously received or lost encoded frame can be reforwarded.

Preferably, the network node is configured for re-forwarding the encoded frame before forwarding the k-th encoded frame, when the encoded frame is to be used for predictively decoding the k-th encoded frame, just to give an example.

For example, the k-th encoded frame results from encoding the k-th signal frame using a (k -N)-th signal frame as reference frame, wherein N -1 denotes a number of frames separating the k-th signal frame and the reference frame in the sequence of frames.

In order to generate the frame information, the frame controller may be configured for comparing the round-trip time between the network node and the receiver with a time interval associated with a duration of the N -1 frames, and for generating the frame information only when the time interval is smaller than the round-trip time.

However, the frame controller may be configured for generating frame information indicating a certain number of frames being smaller than N -1 when the time interval associated with the N -1 frames exceeds the round-trip time by a predetermined time interval, e.g. 500 ms. In this case, the number of frames separating the frame and the reference frame can be reduced in order to reduce the coding gain loss.

According to a further aspect, the present invention provides a receiver for receiving encoded frames from a network entity, for example, from a base station or from a transmitter, wherein the encoded frames result from predictively encoding signal frames as has been described above. For example, a k-th encoded frame may result from predictively encoding a k-th signal frame using a (k -N)-th signal frame as reference frame in a sequence of signal frames. In this regard, N -1 denotes a number of frames separating the k-th signal frame and the (k -N)-th signal frames, by way of example.

In other words, the inventive receiver is a network entity being arranged for receiving encoded frames being transmitted by a transmitter to the receiver or being transmitted by the receiver to a base station and being forwarded by the base station to the receiver.

The receiver may comprise a reception unit configured for receiving the encoded frames, which are transmitted for example over a communication network, for example, over a wireless network. Furthermore, the receiver comprises a prediction decoder configured for decoding the encoded frames, the prediction decoder being configured for decoding the k-th encoded frame using a (k -N)-th decoded frame, which is obtained from decoding a (k -N)-th encoded frame. The prediction encoder may be configured for determining predictable information for the k-th decoded frame from the (k -N)-th encoded frame using e.g. a prediction filter and for encoding information being unpredictable from the (k -N)-th encoded frame but being comprised by the k-th signal frame being used for obtaining the k-th encoded frame.

Thus, an error-free decoding of the k-th encoded frame depends on a quality of the (k -N)-th decoded frame or, in other words, of the (k -N)-th encoded frame. For example, if the (k -N)-th encoded frame has erroneously been received, then the (k -N)-th decoded frame comprises an error affecting decoding of the subsequently received k-th encoded frame and so forth, so that error propagation occurs.

Correspondingly, if the (k -N)-th encoded frame has been received without an error then the k-th encoded frame can error-free be decoded, provided that the k-th encoded frame has also been received without error.

However, the reception errors may not be severe so that, although a small reception error is present, the k-th encoded frame can be encoded almost error-free which may be sufficient for a given application, e.g. for a play-out of a video sequence.

In order to determine a quality of reception of the (k - N)-th encoded frame, the receiver comprises an analyzer configured for analyzing the (k -N)-th encoded frame or the (k -N)-th decoded frame resulting from encoding the (k -N)-th encoded frame, and for generating quality information indicating quality of reception of the (k - N)-th encoded frame.

The quality of reception may, for example, indicate that the (k -N)-th encoded frame has been received error-free (ACK; ACK = acknowledgment). Conversely, the quality of reception may indicate that the (k -N)-th encoded frame has been lost or has been erroneously received (NACK; NACK = negative acknowledgment). Correspondingly, the quality of information may indicate that the (k -N)-th encoded frame comprises a tolerable error, a correctable error or a partially correctable error. In this case, a decision whether to retransmit the erroneously received frame is to be made by a network entity being configured for retransmitting the erroneously received frames.

The receiver further comprises a transmitting unit configured for transmitting a retransmission request to the network entity, when the quality information indicates an erroneous reception of the (k -N)-th encoded frame, wherein the retransmission request indicates that the (k -N)-th encoded frame is to be retransmitted or that a copy of that frame is to be transmitted.

The transmitting unit may further be configured for transmitting the quality information to the network entity, the quality information indicating an erroneous reception, an error-free reception or a partially erroneous reception of the (k -N)-th encoded frame, what the case may be.

Preferably, the transmitting unit is configured for transmitting the retransmission request, which may comprise the quality information, preferably before the (k -N)-th encoded frame depending on the (k -N)-th encoded frame has been transmitted or forwarded, so that error propagation can be stopped or reduced.

Thus, the receiver may comprise a controller configured for determining a time of reception of the retransmitted (k-N)-th encoded frame, and for generating a control signal indicating that N, i.e. a spacing between a frame and the reference frame used for that frame, is to be increased during prediction encoding, when the retransmitted (k -N)-th encoded frame has been received after the (k -N)-th encoded frame.

In order to communicate the control signal to the network entity, the transmitting unit may be configured for transmitting the control signal to the network unit (entity). In response to the control signal, the network unit (entity) may inform a prediction encoder being e.g. implemented in a transmitter that a distance between frames and reference frames used for prediction encoding is to be increased, so that erroneously received encoded frames being required for encoding encoded frames to be subsequently received can timely be retransmitted.

Generally speaking, the receiver may be configured for controlling a prediction encoder via the communication network, the prediction encoder being comprised by e.g. a transmitter, wherein the control process is iteratively performed.

The control information may indicate that the distance between frames and reference frames used for encoding the frames is too short for timely retransmitting erroneously received frames. However, the control signal may indicate a certain number of frames by which the distance between a frame and a reference frame used for predictively encoding is to be increased.

According to a further aspect, the controller may be configured for generating the control signal indicating that the distance between a frame and a reference frame is larger than necessary so that coding gain reduction is unnecessarily introduced. In this case, the control information may indicate a certain number of frames by which the distance between a frame and a reference frame is to be reduced or may indicate that the distance is to be reduced without indicating a specific number.

According to a further aspect, the receiver may comprise the frame controller described above in order to generate the frame information.

It should be noted that the prediction encoder employed for prediction encoding is configured for simultaneously generating information on a distance between a frame and a reference frame, the distance being detectable by e.g. a prediction decoder. However, if the prediction encoder employed for predictively encoding does not generate any information on the distance, than such information may be introduced into a respective encoded frame by a control unit.

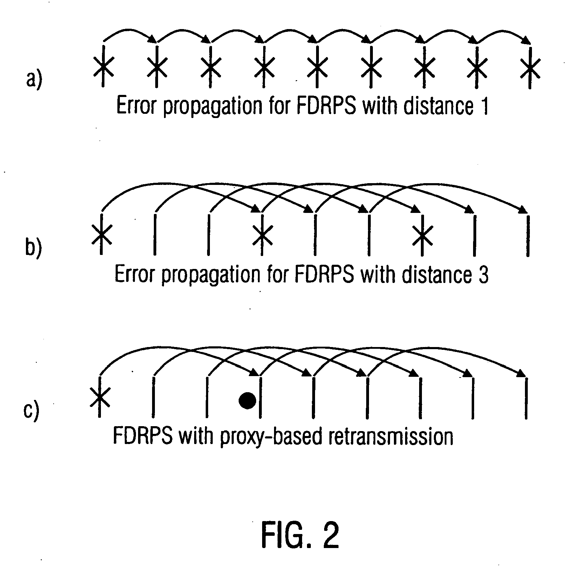

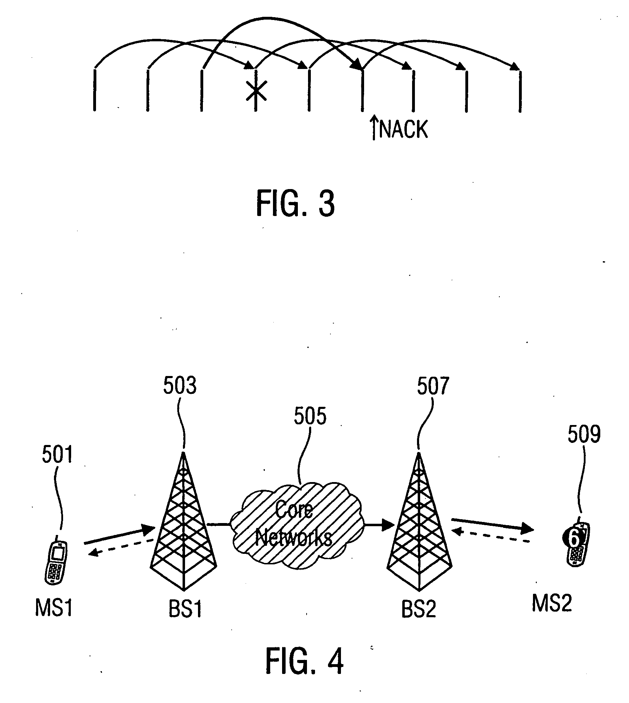

Fig. 2 illustrates error propagation for FDRPS with and without retransmission of lost packets. In Fig. 3a) we show the effect of a lost packet if the current frame is predicted from the most recent frame (FDRPS distance 1). The loss of one frame affects all following frames. In Fig 3b) FDRPS encoding with distance 3 is used. In case of frame loss only one third of the following frames are affected. FDRPS with distance 3 combined with proxy-based retransmission of lost packets is shown in Fig. 3c). Only one frame is corrupted and fast retransmission in combination with accelerated decoding stop error propagation. The arrival of a successful retransmission is shown as a solid circle.

Referring again to Fig. 3, the first frame marked with a thick line cross is lost. Frames corrupted by error propagation are marked with a thin line cross. Thus, timely retransmission may contribute to stopping the error propagation process.

While FDRPS with a distance adjusted to the round-trip time of the downlink in combination with retransmission effectively stops error propagation as shown in Fig. 3c), the coding efficiency in the error-free case is decreased.

It will be shown later that even for low-loss rates this effect is out-weighted by the greatly improved error resilience.

It is assumed that lost packets on the downlink are retransmitted only once. The overheads caused by retransmission therefore corresponds to the packet loss rate of the downlink channel.

The error recovery strategy described so far is adapted to losses on the downlink. In case a packet is lost on the uplink, BS1 returns a NACK to MS1 and the sender reacts to the NACK by changing the reference frame for the next frame to be encoded as shown in Fig. 3. The lost frame is not used as a reference for any following frame. As a result, the frame loss on the uplink will only affect one single frame at the receiver. This frame is displayed at the receiver using error concealment. In Fig. 3 it is assumed that the round-trip time on the downlink corresponds to three frame intervals. FDRPS therefore predicts frame i from frame i-3. After the NACK arrives for the lost frame the reference picture used to predict the current frame is four frames back (thick arrow).

Packets that have been lost on the uplink from MS1 to BS1 do not arrive at BS2. This saves some transmission rate on the downlink, which reduces the overhead encountered for retransmission of those packets that are lost on the downlink.

Please note that the description in this section assumes for illustration purposes that all slices of a video frame use the same reference frame for prediction. This restriction is not necessary. The adaptive RPS on the uplink and the retransmission and accelerated decoding on the downlink can also be done only for those slices that are lost.

If one of the terminals is not mobile the corresponding uplink or downlink error recovery strategy can be waived.

It should be noted that Fig. 3 demonstrates adaptive RPS triggered by feedback from the base station BS1 to the sender MS1. Furthermore, the feedback, e.g. the quality information described above, can also be triggered from the receiver to the sender.

Fig. 4 shows a network scenario where the inventive approach is employed. In particular, error robust real-time video transmission framework is depicted, wherein a mobile video telephony scenario with FDRPS at the encoder, retransmission on the downlink and adaptive RPS triggered by NACKs and a ACKs on the uplink is depicted.

At a transmitter 501 encoding using fixed distance reference picture prediction is performed, by way of example only. The transmitter 501 transmits signals to a network entity 503, for example a base station BS1. Upon packet loss in uplink, feedback from BS1 to MS1 is performed, and RPS using the previous error-free frame to encode the next frame is performed.

The distance between the reference frame and the current frame for FDRPS is adjusted to the round-trip time on the downlink. In case a packet is lost on the downlink, MS2 sends a NACK to BS2 via a feedback channel and BS2 retransmits the lost packet once. The corrupted frame is displayed using error concealment. If the retransmitted packet arrives before the next frame has to be decoded that uses the lost frame as a reference, error propagation is stopped.

The network entity 503 forwards the video packets (encoded frames) over core networks 505 through a network entity 507 (e.g. a base station BS2) to a receiver 509, e.g. a mobile station MS2. Upon packet loss in downlinks, NACK may be sent by a feedback channel to BS2, the NACK is received, lost packets in the buffer on BS2 are resent to MS2 (retransmission), wherein MS2 (the receiver 509) uses the retransmitted packets (encoded frames) to reconstruct the reference picture for the next frame.

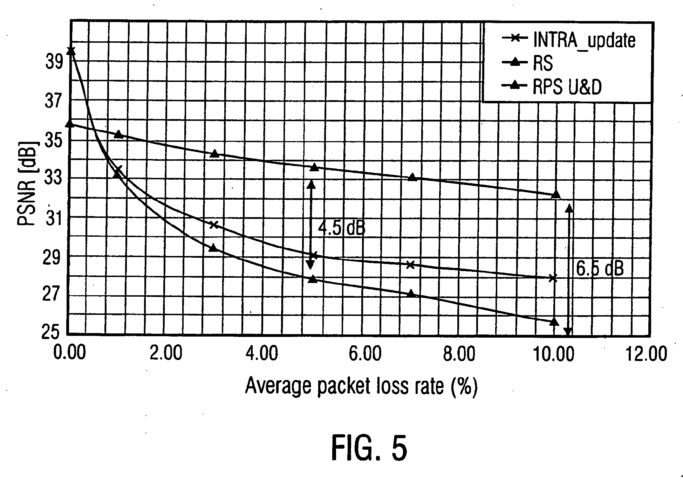

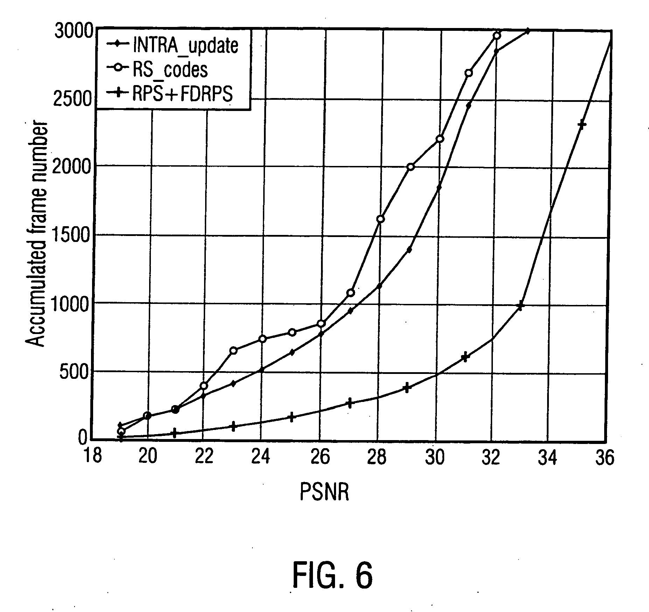

In the following, some simulation results will be presented with respect to Figures 5 and 6, wherein Fig. 5 shows a mean reconstruction quality as a function of loss rate for a mean packet burst length of 5, and wherein Fig. 6 shows the number of frames reconstructed with a quality lower than the PSNR values on the x-axis.

Fig. 5 demonstrates the performance of the inventive approach, wherein points on Intra update and RS curve are the best one selected from all possible QPs, wherein an average burst length is fixed and equal to 5 packets.

It is considered that the burst packet loss behavior of a wireless channel is modeled using the well-known two-state Gilbert-Elliott burst loss model. Foreman in QCIF resolution is used as the test sequence and 10 fps is selected as the frame rate. The H.264 test software version JM 8.4, is disclosed in http:/iphome.hhi.de/suehring/tml/index.htm is employed as the video codec. A slice is selected to correspond to one row of MBs. For transmission, one slice is put into one packet. The H.264 decoder performs error concealment when a slice is lost using both temporal and spatial information. In all simulations, the transmission rate for a video stream is fixed to 90 kbps including all overheads. The inventive approach is compared to two standard error resilience approaches. The first one is random Intra-update where the number of Intra-MBs per frame is varied from 0 to 60 % and picked for every simulation run so that the random update rate leads to the best reconstruction quality at the receiver. The second scheme used for comparison employs FEC across packets for protection against packet losses described in J. Rosenberg, H. Schulzrine, "An RTP payload format for generic forward error correction, "RFC 2733, Dec. 1999. It is assumed that for every *k* video packets n-*k* redundancy packets are transmitted. The receiver can decode the *k* video packets error free if any *k* out of the *n* transmitted packets is received. For the FEC-based scheme the redundancy (*n*/*k*) is varied from 0 to 100 % and the code rate is picked that leads to the best result. The two schemes used here for comparison therefore work better than they would in practice where the current loss rate will not be known to the sender and picking the optimum Intra refresh rate or the optimum code rate would not be possible. For all schemes the QP of the encoded stream is adjusted to meet the bit rate constraint.

In Fig. 6, experimental results for a test sequence of 3000 frames are shown and a packet loss rate of 5 % and mean burst length of 5 packets on both the uplink and the downlink. The 3000-frame sequence is constructed by continuously repeating the Foreman test sequence. Fig. 6 shows how many frames out of the 3000 are reconstructed with a quality lower than the PSNR values shown on the x-axis.

It can be seen from Fig. 6 that random Intra-update and the FEC-based scheme perform very similarly. The prediction distance for the inventive scheme (RPS + FDRPS) is set to be 3 frames, which corresponds to a round-trip time on the downlink of 300 ms. The QP is set to be 28, so that the encoded stream has a bit rate of 85 kbps and about 5 kbps are left for the adaptive RPS on the uplink and the retransmissions on the downlink. Fig. 6 shows that the proposed scheme leads to significantly improved reconstruction quality in comparison to the other two schemes.

Fig. 6 shows the mean reconstruction quality in PSNR for the three schemes as a function of loss rate. The Gilbert-Elliott model is used to generate the test channels with a 1 %, 3 %, 5 %, 7 %, 10 % packet loss rate and the average burst length is kept to be 5 packets. As the simulation runs with the best Intra-update rate are always picked, the optimum amount of FEC redundancy of the two reference schemes outperform the inventive scheme in the error-free case. For error-free transmission the optimum Intra-update rate and redundancy for the FEC-based scheme are 0 %. However, even for very small loss rates the error recovery properties of the inventive scheme leads to significantly improved performance. For packet loss rates between 5-10 % we see up to 4.5 dB improvement in mean reconstruction quality.

A framework for error resilient real-time video transmission in wireless environments is presented in which a fixed distance reference picture selection with retransmission of lost packets to deal with losses on the downlink is combined. The distance of FDRPS is adjusted to the round-trip time of the downlink which gives us the opportunity to retransmit lost packets once and to use successfully retransmitted packets to stop error propagation by accelerated decoding. This strategy is combined with adaptive RPS on the uplink triggered by feedback from the base station to the sender. Please note that the invention is fully standard-compatible when using H.264/AVC. The two major assumptions made are the following. It is assumed that the base stations can send feedback about lost packets to the sender and can retransmit lost packets to the receiver. The second assumption is that the decoder has enough computational resources to decode retransmitted slices or frames fast enough to use them to stop error propagation. As a final point it has to be mentioned that the inventive approach can be combined with the two approaches used for comparison in this paper or other error resiliency approaches for which an even better performance is expected.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing at least one of the inventive methods, when the computer program products runs on a computer. In other words, the inventive methods are, therefore, a computer program having a program code for performing the inventive methods, when the computer program runs on a computer.

## Claims

1. Apparatus for predictively encoding a sequence of signal frames to obtain a sequence of encoded frames, the apparatus comprising:
a prediction encoder (101) configured for providing the sequence of encoded frames from the sequence of signal frames, the prediction encoder (101) being configured for providing a k -th encoded frame from a k-th signal frame and from a reference frame for the k-th signal frame, k being an integer number;
a reception unit (111) configured for receiving frame information indicating a minimum number of frames or a certain number of frames which are to separate the k-th signal frame and the reference frame; and
a controller (113) configured for determining a frame number N from the frame information;
wherein the prediction encoder (101) is configured for selecting a signal frame spaced apart by N frames from the k-th signal frame in the sequence of signal frames as the reference frame for the k-th signal frame,
wherein the frame information indicates a minimum time interval between the k-th frame and the reference frame, the minimum time interval being associated with the minimum number of frames, wherein the controller (113) is configured for determining the number of frames N, N being equal to or greater than the minimum number of frames, and
wherein the sequence of encoded frames is to be transmitted from a transmitter over a communication network via an intermediate network entity to a remote receiver, wherein the minimum number of frames depends on a round-trip time between the intermediate network entity and the remote receiver.

2. Apparatus according to claim 1, wherein the reception unit (109) is configured for performing a round-trip time measurement for determining the minimum number of frames.

3. Apparatus according to claims 1 to 2, wherein the frame information indicates a certain number of frames, and wherein the controller (113) is configured for setting N such that N is equal to the certain number of frames.

4. Apparatus according to claims 1 to 3, wherein the prediction encoder (101) is configured for providing the k-th encoded frame from a k-th signal frame and from a reference frame spaced apart by M frames from the k-th signal frame in the sequence of signal frames, wherein the frame information indicates that the number of frames separating the k-th frame and the reference frame to obtain the certain number of frames is to be increased or decreased, wherein the controller (113) is configured, in response to the frame information, for increasing or decreasing M by a predetermined number of frames to obtain the number of frames N.

5. Apparatus according to claims 1 to 4, wherein the prediction encoder (101) is configured for providing the k-th encoded frame from a k-th signal frame and a reference frame spaced apart by M frames from the k-th signal frame in the sequence of signal frames, wherein the frame information indicates the certain number of frames by which M is to be increased or decreased, and wherein the controller (113) if configured for increasing or decreasing M by the certain number of frames to obtain the number of frames N.

6. Apparatus according to claims 1 to 5, wherein a coding gain associated with prediction encoding depends on a number of frames separating the k-th frame and the reference frame, wherein the frame information indicates a minimum number of frames, and wherein the controller (113) is configured for determining a coding gain loss in dependence on the frame information in order to determine the number of frames N which is associated with a minimum coding gain loss.

7. Apparatus according to claims 1 to 6, wherein the sequence of encoded signal frames is to be transmitted over a communication network to a remote network entity, the remote network entity being configured for transmitting the frame information, and wherein the reception unit is configured for receiving the frame information being transmitted over the communication network.

8. Frame controller for generating frame information indicating a number of frames which are to separate a signal frame and a reference frame in a sequence of frames when predictively encoding the signal frame using the reference frame to obtain an encoded frame to be transmitted from a transmitter to a network node, the network node being configured for forwarding the encoded frame to a receiver, the frame controller being configured for generating frame information indicating a certain number of frames over a minimum number of frames which are to separate the signal frame and the reference frame such that a time interval between the signal frame and the reference frame is equal to or larger than a round-trip time between the network node and the receiver and smaller than the round-trip time between the transmitter and the receiver.

9. Frame controller according to claim 8, configured for generating frame information indicating the round-trip time between the network node and the receiver, the round-trip time indicating the duration of a minimum number of frames.

10. Frame controller according to claim 8 or 9, configured for determining a minimum number of frames associated with a time interval which is not smaller than the round-trip time between the network node and the receiver and for generating frame information indicating the minimum number of frames.

11. Frame controller according to claims 8 to 10, configured for determining a certain number of frames by which a number of frames separating the signal frame and the reference frame is to be increased or decreased.

12. Frame controller according to claims 8 to 11, wherein a coding gain associated with prediction encoding depends on a number of frames separating the signal frame and the reference frame used for prediction encoding, wherein the frame controllers configured for determining the certain number of frames associated with a maximum coding gain.

13. Frame controller according to claims 8 to 12, configured for generating the frame information only when the round-trip time between the network node and the receiver has changed.

14. Frame controller according to claims 8 to 13, configured for receiving information on the round-trip time between the network node and the receiver from the network node.

15. Frame controlled according to claims 8 to 14, comprising a transmitting unit configured for transmitting the frame information to the transmitter.

16. Transmitter apparatus comprising:
the apparatus for predictively encoding a sequence of signal frames to obtain a sequence of encoded frame according to claims 1 to 7;
a frame schedule for scheduling the encoded frames;
wherein the prediction encoder is configured for providing a k-th encoded frame from a k-th signal frame and from a (k -N)-th signal frame in the sequence of signal frames, wherein the reception unit is configured for receiving quality information from a remote network entity, the quality information indicating a quality of reception of a (k -N)-th encoded frame being transmitted to the remote network entity, the (k -N)-th encoded frame being provided by the prediction encoder from the (k -N)-th signal frame and from a (k -2N)-th signal frame, wherein the frame schedule is configured for scheduling a copy of the (k -N)-th encoded frame for retransmission before transmission of the k-th encoded frame when the quality information indicates an erroneous reception of the (k -N)-th encoded frame, and wherein the apparatus is configured for transmitting a copy of the (k -N)-th encoded frame.

17. Transmitter apparatus according to claim 16, comprising the frame controller according to claims 8 to 15.

18. Network node configured for receiving encoded frames from a transmitter and for forwarding the encoded frames to a receiver, the transmitter being configured for predictively encoding a sequence of signal frames to obtain the encoded frames, wherein a k-th encoded frame results from predictively encoding a k-th signal frame and a reference frame spaced apart from the k-th signal frame in the sequence of signal frames, k being an integer number, the network node comprising:
means for measuring a round-trip time between the network node and the receiver;
the frame controller according to claims 8 to 15 for generating frame information from the round-trip time, the frame information indicating a certain number or a minimum number of frames which are to separate the k-th signal frame and the reference frame in the sequence of signal frames; and
a transmitting unit configured for transmitting the frame information to the transmitter.

19. Network node according to claim 18, configured for receiving quality information from the receiver, the quality information indicating a quality of reception of an encoded frame being forwarded by the network node to the receiver, and for re-forwarding the encoded frame to the receiver when the quality information indicates an erroneous reception of the encoded frame.

20. Network node according to claim 19, configured for re-forwarding the encoded frame before forwarding the k-th encoded frame, when the encoded frame is to be used for predictively decoding the k-th encoded frame.

21. Network node according to claims 18 to 20, wherein the k-th encoded frame results from encoding the k-th signal frame using a (k -N)-th signal frame as reference frame, wherein N -1 denotes a number of frames separating the k-th signal frame and the reference frame, and wherein the frame controller is configured for comparing the round-trip time between the network node and the receiver with a time interval associated with a duration of the N -1 frames, and for generating the frame information when the time interval is smaller than the round-trip time.

22. Network node according to claim 21, wherein the frame controller is configured for generating frame information indicating a certain number of frames being smaller than N -1 when the time interval associated with the N -1 frames exceeds the round-trip time by a predetermined time interval.

23. Method for predictively encoding a sequence of signal frames to obtain a sequence of encoded frames, the method comprising:
predictively encoding a sequence of signal frames to obtain a sequence of encoded frames, wherein a k-th encoded frame results from predictively encoding a k-th signal frame using a reference frame for the k-th signal frame, where k is an integer number;
deceiving frame information indicating a minimum number of frames or a certain number of frames which are to separate the k-th signal frame and the reference frame; and
determining a frame number N from the frame information;
wherein the prediction encoding comprises selecting a signal frame spaced apart by N frames from the k-th signal frame in the sequence of signal frames as the reference frame for the k-th signal frame,
wherein the frame information indicates a minimum time interval between the k-th frame and the reference frame, the minimum time interval being associated with the minimum number of frames, wherein the step of determining the number of frames N comprises determining the number of frames N being equal to for greater than the minimum number of frames, and
wherein the sequence of encoded frames is to be transmitted from a transmitter over a communication network via an intermediate network entity to a remote receiver, wherein the minimum number of frames depends on a round-trip time between the intermediate network entity and the remote receiver.

24. Method for generating frame information indicating a number of frames which are to separate a signal frame and a reference frame in a sequence of frames when predictively encoding the signal frame using the reference frame to obtain an encoded frame to be transmitted from a transmitter to a network node, the network node being configured for forwarding the encoded frame to a receiver, the method comprising:
generating frame information indicating a certain number of frames or a minimum number of frames which are to separate the signal frame and the reference frame such that a time interval between the signal frame and the reference frame is equal to or larger than a round-trip time between the network node and the receiver and smaller than the round-trip time between the transmitter and the receiver.

25. Computer program for performing at least one of the methods according to claims 23 to 24, when the computer program runs on a computer.

## Patentansprüche

1. Vorrichtung zum prädiktiven Codieren einer Sequenz von Signalrahmen, um eine Sequenz von codierten Rahmen zu erhalten, wobei die Vorrichtung folgende Merkmale aufweist:
einen Prädiktionscodierer (101), der zum Liefern der Sequenz codierter Rahmen aus der Sequenz von Signalrahmen konfiguriert ist, wobei der Prädiktionscodierer (101) zum Liefern eines k-ten codierten Rahmens aus einem k-ten Signalrahmen und aus einem Referenzrahmen für den k-ten Signalrahmen konfiguriert ist, wobei k eine Ganzzahl ist;
eine Empfangseinheit (111), die zum Empfangen von Rahmeninformationen konfiguriert ist, die eine minimale Anzahl von Rahmen oder eine bestimmte Anzahl von Rahmen angeben, die den k-ten Signalrahmen und den Referenzrahmen trennen sollen; und
eine Steuerung (113), die zum Bestimmen einer Rahmenanzahl N aus den Rahmeninformationen konfiguriert ist;
wobei der Prädiktionscodierer (101) zum Auswählen eines Signalrahmens, der durch N Rahmen von dem k-ten Signalrahmen in der Sequenz von Signalrahmen beabstandet ist, als dem Referenzrahmen für den k-ten Signalrahmen konfiguriert ist,
wobei die Rahmeninformationen ein minimales Zeitintervall zwischen dem k-ten Rahmen und dem Referenzrahmen angeben, wobei das minimale Zeitintervall der minimalen Anzahl von Rahmen zugeordnet ist, wobei die Steuerung (113) zum Bestimmen der Anzahl von Rahmen N konfiguriert ist, wobei N größer oder gleich der minimalen Anzahl von Rahmen ist, und
wobei die Sequenz codierter Rahmen von einem Sender über ein Kommunikationsnetzwerk über eine Zwischennetzwerkentität an einen entfernten Empfänger gesendet werden soll, wobei die minimale Anzahl von Rahmen von einer Umlaufzeit zwischen der Zwischennetzwerkentität und dem entfernten Empfänger abhängt.

2. Vorrichtung gemäß Anspruch 1, bei der die Empfangseinheit (109) zum Durchführen einer Umlaufzeitmessung zum Bestimmen der minimalen Anzahl von Rahmen konfiguriert ist.

3. Vorrichtung gemäß einem der Ansprüche 1 bis 2, bei der die Rahmeninformationen eine bestimmte Anzahl von Rahmen angeben und bei der die Steuerung (113) zum Setzen von N konfiguriert ist, derart, dass N gleich der bestimmten Anzahl von Rahmen ist.

4. Vorrichtung gemäß einem der Ansprüche 1 bis 3, bei der der Prädiktionscodierer (101) zum Liefern des k-ten codierten Rahmens aus einen k-ten Signalrahmen und aus einem Referenzrahmen konfiguriert ist, der um M Rahmen von dem k-ten Signalrahmen in der Sequenz von Signalrahmen beabstandet ist, wobei die Rahmeninformationen angeben, dass die Anzahl von Rahmen, die den k-ten Rahmen und den Referenzrahmen trennen, um die bestimmte Anzahl von Rahmen zu erhalten, erhöht oder verringert werden soll, wobei die Steuerung (113) konfiguriert ist, um ansprechend auf die Rahmeninformationen M um eine vorbestimmte Anzahl von Rahmen zu erhöhen oder zu verringern, um die Anzahl von Rahmen N zu erhalten.

5. Vorrichtung gemäß einem der Ansprüche 1 bis 4, bei der der Prädiktionscodierer (101) zum Liefern des k-ten codierten Rahmens aus einem k-ten Signalrahmen und einem Referenzrahmen konfiguriert ist, der um M Rahmen von dem k-ten Signalrahmen in der Sequenz von Signalrahmen beabstandet ist, wobei die Rahmeninformationen die bestimmte Anzahl von Rahmen angeben, um die M erhöht oder verringert werden soll, und wobei die Steuerung (113) zum Erhöhen oder Verringern von M um die bestimmte Anzahl von Rahmen konfiguriert ist, um die Anzahl von Rahmen N zu erhalten.

6. Vorrichtung gemäß einem der Ansprüche 1 bis 5, bei der ein Codiergewinn, der einem Prädiktionscodieren zugeordnet ist, von einer Anzahl von Rahmen abhängt, die den k-ten Rahmen und den Referenzrahmen trennen, wobei die Rahmeninformationen eine minimale Anzahl von Rahmen angeben und wobei die Steuerung (113) zum Bestimmen eines Codiergewinnverlusts in Abhängigkeit von den Rahmeninformationen konfiguriert ist, um die Anzahl von Rahmen N zu bestimmen, die einem minimalen Codiergewinnverlust zugeordnet ist.

7. Vorrichtung gemäß einem der Ansprüche 1 bis 6, bei der die Sequenz von codierten Signalrahmen über ein Kommunikationsnetzwerk an eine entfernte Netzwerkentität gesendet werden soll, wobei die entfernte Netzwerkentität zum Übertragen der Rahmeninformationen konfiguriert ist, und wobei die Empfangseinheit zum Empfangen der Rahmeninformationen konfiguriert ist, die über das Kommunikationsnetzwerk übertragen werden.

8. Rahmensteuerung zum Erzeugen von Rahmeninformationen, die eine Anzahl von Rahmen angeben, die einen Signalrahmen und einen Referenzrahmen in einer Sequenz von Rahmen trennen sollen, bei einem prädiktiven Codieren des Signalrahmens unter Verwendung des Referenzrahmens, um einen codierten Rahmen zu erhalten, der von einem Sender an einen Netzwerkknoten gesendet werden soll, wobei der Netzwerkknoten zum Weiterleiten des codierten Rahmens an einen Empfänger konfiguriert ist,
wobei die Rahmensteuerung zum Erzeugen von Rahmeninformationen konfiguriert ist, die eine bestimmte Anzahl von Rahmen über einer minimalen Anzahl von Rahmen angeben, die den Signalrahmen und den Referenzrahmen trennen sollen, derart, dass ein Zeitintervall zwischen dem Signalrahmen und dem Referenzrahmen größer oder gleich einer Umlaufzeit zwischen dem Netzwerkknoten und dem Empfänger und kleiner als die Umlaufzeit zwischen dem Sender und dem Empfänger ist.

9. Rahmensteuerung gemäß Anspruch 8, die zum Erzeugen von Rahmeninformationen konfiguriert ist, die die Umlaufzeit zwischen dem Netzwerkknoten und dem Empfänger angeben, wobei die Umlaufzeit die Dauer einer minimalen Anzahl von Rahmen angibt.

10. Rahmensteuerung gemäß Anspruch 8 oder 9, die zum Bestimmen einer minimalen Anzahl von Rahmen, die einem Zeitintervall zugeordnet ist, das nicht kleiner als die Umlaufzeit zwischen dem Netzwerkknoten und dem Empfänger ist, und zum Erzeugen von Rahmeninformationen konfiguriert ist, die die minimale Anzahl von Rahmen angeben.

11. Rahmensteuerung gemäß einem der Ansprüche 8 bis 10, die zum Bestimmen einer bestimmten Anzahl von Rahmen konfiguriert ist, um die eine Anzahl von Rahmen, die den Signalrahmen und den Referenzrahmen trennen, erhöht oder verringert werden soll.

12. Rahmensteuerung gemäß einem der Ansprüche 8 bis 11, bei der ein Codiergewinn, der einem Prädiktionscodieren zugeordnet ist, von einer Anzahl von Rahmen abhängt, die den Signalrahmen und den Referenzrahmen trennen, die für ein Prädiktionscodieren verwendet werden, wobei die Rahmensteuerung zum Bestimmen der bestimmten Anzahl von Rahmen konfiguriert ist, die einem maximalen Codiergewinn zugeordnet ist.

13. Rahmensteuerung gemäß einem der Ansprüche 8 bis 12, die konfiguriert ist zum Erzeugen der Rahmeninformationen nur dann, wenn die Umlaufzeit zwischen dem Netzwerkknoten und dem Empfänger sich geändert hat.

14. Rahmensteuerung gemäß einem der Ansprüche 8 bis 13, die zum Empfangen von Informationen über die Umlaufzeit zwischen dem Netzwerkknoten und dem Empfänger von dem Netzwerkknoten konfiguriert ist.

15. Rahmensteuerung gemäß einem der Ansprüche 8 bis 14, die eine Sendeeinheit aufweist, die zum Senden der Rahmeninformationen an den Sender konfiguriert ist.

16. Sendervorrichtung, die folgende Merkmale aufweist:
die Vorrichtung zum prädiktiven Codieren einer Sequenz von Signalrahmen, um eine Sequenz von codierten Rahmen zu erhalten, gemäß einem der Ansprüche 1 bis 7;
einen Rahmenzeitplan zum zeitlichen Planen der codierten Rahmen;
wobei der Prädiktionscodierer zum Liefern eines k-ten codierten Rahmens aus einem k-ten Signalrahmen und aus einem (k-N)-ten Signalrahmen in der Sequenz von Signalrahmen konfiguriert ist, wobei die Empfangseinheit zum Empfangen von Qualitätsinformationen von einer entfernten Netzwerkentität konfiguriert ist, wobei die Qualitätsinformationen eine Empfangsqualität eines (k-N)-ten codierten Rahmens angeben, der an die entfernt Netzwerkentität gesendet wird, wobei der (k-N)-te codierte Rahmen durch den Prädiktionscodierer aus dem (k-N)-ten Signalrahmen und aus einem (k-2N)-ten Signalrahmen geliefert wird, wobei der Rahmenzeitplan zum zeitlichen Planen einer Kopie des (k-N)-ten codierten Rahmens für eine Neuübertragung vor einer Übertragung des k-ten codierten Rahmens konfiguriert ist, wenn die Qualitätsinformationen einen fehlerhaften Empfang des (k-N)-ten codierten Rahmens angeben, und wobei die Vorrichtung zum Senden einer Kopie des (k-N)-ten codierten Rahmens konfiguriert ist.

17. Sendervorrichtung gemäß Anspruch 16, die die Rahmensteuerung gemäß einem der Ansprüche 8 bis 15 aufweist.

18. Netzwerkknoten, der zum Empfangen codierter Rahmen von einem Sender und zum Weiterleiten der codierten Rahmen an einen Empfänger konfiguriert ist, wobei der Sender zum prädiktiven Codieren einer Sequenz von Signalrahmen konfiguriert ist, um die codierten Rahmen zu erhalten, wobei sich ein k-ter codierter Rahmen aus einem prädiktiven Codieren eines k-ten Signalrahmens und eines Referenzrahmens ergibt, der von dem k-ten Signalrahmen in der Sequenz von Signalrahmen beabstandet ist, wobei k eine Ganzzahl ist, wobei der Netzwerkknoten folgende Merkmale aufweist:
eine Einrichtung zum Messen einer Umlaufzeit zwischen dem Netzwerkknoten und dem Empfänger;
die Rahmensteuerung gemäß einem der Ansprüche 8 bis 15 zum Erzeugen von Rahmeninformationen aus der Umlaufzeit, wobei die Rahmeninformationen eine bestimmte Anzahl oder eine minimale Anzahl von Rahmen angeben, die den k-ten Signalrahmen und den Referenzrahmen in der Sequenz von Signalrahmen trennen sollen; und
eine Sendeeinheit, die zum Senden der Rahmeninformationen an den Sender konfiguriert ist.

19. Netzwerkknoten gemäß Anspruch 18, der zum Empfangen von Qualitätsinformationen von dem Empfänger, wobei die Qualitätsinformationen eine Empfangsqualität eines codierten Rahmens angeben, der durch den Netzwerkknoten an den Empfänger weitergeleitet wird, und zum erneuten Weiterleiten des codierten Rahmens an den Empfänger konfiguriert ist, wenn die Qualitätsinformationen einen fehlerhaften Empfang des codierten Rahmens angeben.

20. Netzwerkknoten gemäß Anspruch 19, der zum erneuten Weiterleiten des codierten Rahmens vor einem Weiterleiten des k-ten codierten Rahmens konfiguriert ist, wenn der codierte Rahmen zum prädiktiven Decodieren des k-ten codierten Rahmens verwendet werden soll.

21. Netzwerkknoten gemäß einem der Ansprüche 18 bis 20, bei dem der k-te codierte Rahmen sich aus einem Codieren des k-ten Signalrahmens unter Verwendung eines (k-N)-ten Signalrahmens als Referenzrahmen ergibt, wobei N - 1 eine Anzahl von Rahmen angibt, die den k-ten Signalrahmen und den Referenzrahmen trennen, und wobei die Rahmensteuerung zum Vergleichen der Umlaufzeit zwischen dem Netzwerkknoten und dem Empfänger mit einem Zeitintervall, das einer Dauer der N - 1 Rahmen zugeordnet ist, und zum Erzeugen der Rahmeninformationen, wenn das Zeitintervall kleiner als die Umlaufzeit ist, konfiguriert ist.

22. Netzwerkknoten gemäß Anspruch 21, bei dem die Rahmensteuerung zum Erzeugen von Rahmeninformationen, die eine bestimmte Anzahl von Rahmen kleiner N - 1 angeben, konfiguriert ist, wenn das Zeitintervall, das den N - 1 Rahmen zugeordnet ist, die Umlaufzeit um ein vorbestimmtes Zeitintervall überschreitet.

23. Verfahren zum prädiktiven Codieren einer Sequenz von Signalrahmen, um eine Sequenz von codierten Signalrahmen zu erhalten, wobei das Verfahren folgende Schritte aufweist:
prädiktives Codieren einer Sequenz von Signalrahmen, um eine Sequenz von codierten Rahmen zu erhalten, wobei ein k-ter codierter Rahmen sich aus einem prädiktiven Codieren eines k-ten Signalrahmens unter Verwendung eines Referenzrahmens für den k-ten Signalrahmen ergibt, wobei k eine Ganzzahl ist;
Empfangen von Rahmeninformationen, die eine minimale Anzahl von Rahmen oder eine bestimmte Anzahl von Rahmen angeben, die den k-ten Signalrahmen und den Referenzrahmen trennen sollen; und
Bestimmen einer Rahmenanzahl N aus den Rahmeninformationen;
wobei das Prädiktionscodieren ein Auswählen eines Signalrahmens, der um N Rahmen von dem k-ten Signalrahmen in der Sequenz von Signalrahmen beabstandet ist, als dem Referenzrahmen für den k-ten Signalrahmen aufweist,
wobei die Rahmeninformationen ein minimales Zeitintervall zwischen dem k-ten Rahmen und dem Referenzrahmen angeben, wobei das minimale Zeitintervall der minimalen Anzahl von Rahmen zugeordnet ist, wobei der Schritt des Bestimmens der Anzahl von Rahmen N ein Bestimmen der Anzahl von Rahmen N größer oder gleich der minimalen Anzahl von Rahmen aufweist, und
wobei die Sequenz von codierten Rahmen von einem Sender 'über ein Kommunikationsnetzwerk über eine Zwischennetzwerkentität an einen entfernten Empfänger gesendet werden soll, wobei die minimale Anzahl von Rahmen von einer Umlaufzeit zwischen der Zwischennetzwerkentität und dem entfernten Empfänger abhängt.

24. Verfahren zum Erzeugen von Rahmeninformationen, die eine Anzahl von Rahmen angeben, die einen Signalrahmen und einen Referenzrahmen in einer Sequenz von Rahmen trennen sollen, bei einem prädiktiven Codieren der Signalrahmen unter Verwendung des Referenzrahmens, um einen codierten Rahmen zu erhalten, der von einem Sender an einen Netzwerkknoten gesendet werden soll, wobei der Netzwerkknoten zum Weiterleiten des codierten Rahmens an einen Empfänger konfiguriert ist, wobei das Verfahren folgenden Schritt aufweist:
Erzeugen von Rahmeninformationen, die eine bestimmte Anzahl von Rahmen oder eine minimale Anzahl von Rahmen angeben, die den Signalrahmen und den Referenzrahmen trennen sollen, derart, dass ein Zeitintervall zwischen dem Signalrahmen und dem Referenzrahmen größer oder gleich einer Umlaufzeit zwischen dem Netzwerkknoten und dem Empfänger und kleiner als die Umlaufzeit zwischen dem Sender und dem Empfänger ist.

25. Computerprogramm zum Durchführen zumindest eines der Verfahren gemäß einem der Ansprüche 23 bis 24, wenn das Computerprogramm auf einem Computer abläuft.

## Revendications

1. Appareil permettant le codage prédictif d'une séquence de trames de signal pour obtenir une séquence de trames codées, l'appareil comprenant:
un codeur prédictif (101) configuré pour fournir la séquence de trames codées à partir de la séquence de trames de signal, le codeur prédictif (101) étant configuré pour fournir une k-ième trame codée à partir d'une k-ième trame de signal et d'une trame de référence pour la k-ième trame de signal, K étant un nombre entier;
une unité de réception (111) configurée pour recevoir des informations de trames indiquant un nombre minimum de trames ou un certain nombre de trames qui doivent séparer la k-ième trame de signal et la trame de référence; et
un contrôleur (113) configuré pour déterminer un nombre de trames N à partir des informations de trames;
dans lequel le codeur prédictif (101) est configuré pour sélectionner une trame de signal distante de N trames de la k-ième trame de signal dans la séquence de trames de signal comme trame de référence pour la k-ième trame de signal,
dans lequel les informations de trames indiquent un intervalle de temps minimum entre la k-ième trame et la trame de référence, l'intervalle de temps minimum étant associé au nombre minimum de trames, dans lequel le contrôleur (113) est configuré pour déterminer le nombre de trames N, N étant égal ou supérieur au nombre minimum de trames, et
dans lequel la séquence de trames codées doit être transmise d'un émetteur, par un réseau de communication via une unité de réseau intermédiaire, à un récepteur distant, dans lequel le nombre minimum de trames dépend d'un temps aller-retour entre l'unité de réseau intermédiaire et le récepteur distant.

2. Appareil selon la revendication 1, dans lequel l'unité de réception (109) est configurée pour effectuer une mesure de temps aller-retour pour déterminer le nombre minimum de trames.

3. Appareil selon les revendications 1 à 2, dans lequel les informations de trames indiquent un certain nombre de trames, et dans lequel le contrôleur (113) est configuré pour régler N de sorte que N soit égal au certain nombre de trames.

4. Appareil selon les revendications 1 à 3, dans lequel le codeur prédictif (101) est configuré pour fournir la k-ième trame codée à partir d'une k-ième trame de signal et d'une trame de référence distante de M trames de la k-ième trame de signal dans la séquence de trames de signal, dans lequel les informations de trames indiquent que le nombre de trames séparant la k-ième trame et la trame de référence pour obtenir le certain nombre de trames doit être augmenté ou diminué, dans lequel le contrôleur (113) est configuré, en réponse aux informations de trames, pour augmenter ou diminuer M d'un nombre prédéterminé de trames pour obtenir le nombre de trames N.

5. Appareil selon les revendications 1 à 4, dans lequel le codeur prédictif (101) est configuré pour fournir la k-ième trame codée à partir d'une k-ième trame de signal et d'une trame de référence distante de M trames de la k-ième trame de signal dans la séquence de trames de signal, dans lequel les informations de trames indiquent le certain nombre de trames duquel M doit être augmenté ou diminué, et dans lequel le contrôleur (113) est configuré pour augmenter ou diminuer M du certain nombre de trames pour obtenir le nombre de trames N.

6. Appareil selon les revendications 1 à 5, dans lequel un gain de codage associé au codage prédictif dépend d'un certain nombre de trames séparant la k-ième trame et la trame de référence, dans lequel les informations de trames indiquent un nombre minimum de trames, et dans lequel le contrôleur (113) est configuré pour déterminer une perte de gain de codage en fonction des informations de trames pour déterminer le nombre de trames N qui est associé à une perte minimale de gain de codage.

7. Appareil selon les revendications 1 à 6, dans lequel la séquence de trames de signal codées doit être transmise via un réseau de communication à une unité de réseau distante, l'unité de réseau distante étant configurée pour transmettre les informations de trames, et dans lequel l'unité de réception est configurée pour recevoir les informations de trames transmises via le réseau de communication.

8. Contrôleur de trames pour générer des informations de trames indiquant un nombre de trames qui doivent séparer une trame de signal et une trame de référence dans une séquence de trames lors du codage prédictif de la trame de signal à l'aide de la trame de référence pour obtenir une trame codée à transmettre d'un émetteur à un noeud de réseau, le noeud de réseau étant configuré pour envoyer la trame codée à un récepteur, le contrôleur de trame étant configuré pour générer des informations de trames indiquant un certain nombre de trames au-delà d'un nombre minimum de trames qui doivent séparer la trame de signal et la trame de référence de sorte qu'un intervalle de temps entre la trame de signal et la trame de référence soit égal ou supérieur à un temps aller-retour entre le noeud de réseau et le récepteur et inférieur au temps aller-retour entre l'émetteur et le récepteur.

9. Contrôleur de trames selon la revendication 8, configuré pour générer des informations de trames indiquant le temps aller-retour entre le noeud de réseau et le récepteur, le temps aller-retour indiquant la durée d'un nombre minimum de trames.

10. Contrôleur de trames selon la revendication 8 ou 9, configuré pour déterminer un nombre minimum de trames associées à un intervalle de temps qui n'est pas inférieur au temps aller-retour entre le noeud de réseau et le récepteur et pour générer des informations de trames indiquant le nombre minimum de trames.

11. Contrôleur de trames selon les revendications 8 à 10, configuré pour déterminer un certain nombre de trames duquel doit être augmenté ou diminué un nombre de trames séparant la trame de signal et la trame de référence.

12. Contrôleur de trames selon les revendications 8 à 11, dans lequel un gain de codage associé au codage prédictif est fonction d'un nombre de trames séparant la trame de signal et la trame de référence utilisées pour le codage prédictif, dans lequel le contrôleur de trame est configuré pour déterminer le certain nombre de trames associées à un gain de codage maximum.

13. Contrôleur de trames selon les revendications 8 à 12, configuré pour générer les informations de trames uniquement lorsque le temps aller-retour entre le noeud de réseau et le récepteur a changé.

14. Contrôleur de trames selon les revendications 8 à 13, configuré pour recevoir l'information relative au temps aller-retour entre le noeud de réseau et le récepteur à partir du noeud de réseau.

15. Contrôleur de trames selon les revendications 8 à 14, comprenant une unité de transmission configurée pour transmettre les informations de trames à l'émetteur.

16. Appareil émetteur comprenant:
l'appareil pour le codage prédictif d'une séquence de trames de signal pour obtenir une séquence de trames codées selon les revendications 1 à 7;
un programme de trames pour programmer les trames codées;
dans lequel le codeur prédictif est configuré pour fournir une k-ième trame codée à partir d'une k-ième trame de signal et à partir d'une (k-N)-ième trame de signal dans la séquence de trames de signal, dans lequel l'unité de réception est configurée pour recevoir l'information de qualité d'une unité de réseau distante, l'information de qualité indiquant une qualité de réception d'une (k-N)-ième trame codée transmise à l'unité de réseau distante, la (k-N)-ième trame codée étant fournie par le codeur prédictif à partir de la (k-N)-ième trame de signal et à partir d'une (k-2N)-ième trame de signal, dans lequel le programme de trames est configuré pour programmer une copie de la (k-N)-ième trame codée pour retransmission avant la transmission de la k-ième trame codée lorsque l'information de qualité indique une réception erronée de la (k-N)-ième trame codée, et dans lequel l'appareil est configuré pour transmettre une copie de la (k-N)-ième trame codée.

17. Appareil émetteur selon la revendication 16, comprenant le contrôleur de trame selon les revendications 8 à 15.

18. Noeud de réseau configuré pour recevoir des trames codées d'un émetteur et pour envoyer les trames codées à un récepteur, l'émetteur étant configuré pour coder de manière prédictive une séquence de trames de signal pour obtenir les trames codées, dans lequel une k-ième trame codée résulte d'un codage prédictif d'une k-ième trame de signal et d'une trame de référence distante de la k-ième trame de signal dans la séquence de trames de signal, K étant un nombre entier, le noeud de réseau comprenant:
un moyen pour mesurer un temps aller-retour entre le noeud de réseau et le récepteur;
le contrôleur de trames selon les revendications 8 à 15 pour générer des informations de trames à partir du temps aller-retour, les informations de trames indiquant un certain nombre ou un nombre minimum de trames qui doivent séparer la k-ième trame de signal et la trame de référence dans la séquence de trames de signal; et
une unité de transmission configurée pour transmettre les informations de trames à l'émetteur.

19. Noeud de réseau selon la revendication 18, configuré pour recevoir l'information de qualité du récepteur, l'information de qualité indiquant une qualité de réception d'une trame codée envoyée par le noeud de réseau au récepteur, et pour envoyer à nouveau la trame codée au récepteur lorsque l'information de qualité indique une réception erronée de la trame codée.

20. Noeud de réseau selon la revendication 19, configuré pour envoyer à nouveau la trame codée avant l'envoi de la k-ième trame codée lorsque la trame codée doit être utilisée pour décoder de manière prédictive la k-ième trame codée.

21. Noeud de réseau selon les revendications 18 à 20, dans lequel la k-ième trame codée résulte du codage de la k-ième trame de signal à l'aide d'une (k-N)-ième trame de signal comme trame de référence, où N-1 désigne un nombre de trames séparant la k-ième trame de signal et la trame de référence, et dans lequel le contrôleur de trame est configuré pour comparer le temps aller-retour entre le noeud de réseau et le récepteur à un intervalle de temps associé à une durée des N-1 trames, et pour générer les informations de trames lorsque l'intervalle de temps est inférieur au temps aller-retour.

22. Noeud de réseau selon la revendication 21, dans lequel le contrôleur de trames est configuré pour générer des informations de trames indiquant un certain nombre de trames inférieur à N-1 lorsque l'intervalle de temps associé aux N-1 trames excède le temps aller-retour d'un intervalle de temps prédéterminé.

23. Procédé permettant le codage prédictif d'une séquence de trames de signal pour obtenir une séquence de trames codées, le procédé comprenant:
coder de manière prédictive une séquence de trames de signal pour obtenir une séquence de trames codées, où une k-ième trame codée résulte d'un codage prédictif d'une k-ième trame de signal à l'aide d'une trame de référence pour la k-ième trame de signal, K étant un nombre entier;
recevoir des informations de trames indiquant un nombre minimum de trames ou un certain nombre de trames qui doivent séparer la k-ième trame de signal et la trame de référence; et
déterminer un nombre de trames N à partir des informations de trames;
dans lequel le codage prédictif comprend le fait de sélectionner une trame de signal distante de N trames de la k-ième trame de signal dans la séquence de trames de signal comme trame de référence pour la k-ième trame de signal,
dans lequel les informations de trames indiquent un intervalle de temps minimum entre la k-ième trame et la trame de référence, l'intervalle de temps minimum étant associé au nombre minimum de trames, dans lequel l'étape consistant à déterminer le nombre de trames N comprend le fait de déterminer le nombre de trames N égal ou supérieur au nombre minimum de trames, et
dans lequel la séquence de trames codées doit être transmise d'un émetteur, par un réseau de communication via une unité de réseau intermédiaire, à un récepteur distant, dans lequel le nombre minimum de trames dépend d'un temps aller-retour entre l'unité de réseau intermédiaire et le récepteur distant.

24. Procédé pour générer des informations de trames indiquant un nombre de trames qui doivent séparer une trame de signal et une trame de référence dans une séquence de trames lors du codage prédictif de la trame de signal à l'aide de la trame de référence pour obtenir une trame codée à transmettre d'un émetteur à un noeud de réseau, le noeud de réseau étant configuré pour envoyer la trame codée à un récepteur, le procédé comprenant:
générer des informations de trames indiquant un certain nombre de trames ou un nombre minimum de trames qui doivent séparer la trame de signal et la trame de référence de sorte qu'un intervalle de temps entre la trame de signal et la trame de référence soit égal ou supérieur à un temps aller-retour entre le noeud de réseau et le récepteur et inférieur au temps aller-retour entre l'émetteur et le récepteur.

25. Programme d'ordinateur pour réaliser au moins l'un des procédés selon les revendications 23 à 24 lorsque le programme d'ordinateur est exécuté sur un ordinateur.
